# EUROPÄISCHE PATENTSCHRIFT

(11) **EP 0 754 135 B1**
(45) Veröffentlichungstag und Bekanntmachung des Hinweises auf die Patenterteilung: **22.10.1997**
(21) Anmeldenummer: 95915840.3
(22) Anmeldetag: 04.04.1995
(51) Int. Cl.: B60T 7/08

(54) **FESTSTELLBREMSE FÜR KRAFTFAHRZEUGE, FAHRZEUGANHÄNGER ODER DERGLEICHEN**
PARKING BRAKE FOR MOTOR VEHICLES, TRAILERS, ETC.
FREIN DE STATIONNEMENT POUR AUTOMOBILES, REMORQUES OU ANALOGUE

(30) Priorität: 08.04.1994 DE 9405849 U
(43) Veröffentlichungstag der Anmeldung: 22.01.1997
(73) Patentinhaber: AL-KO KOBER AG, D-89359 Kötz (DE)
(72) Erfinder: RAMPP, Armin, D-86513 Ursberg (DE)
(74) Vertreter: Ernicke, Hans-Dieter, Dipl.-Ing.
(86) Internationale Anmeldenummer: EP9501224
(87) Internationale Veröffentlichungsnummer: WO9527642

(56) Entgegenhaltungen:
- EP-A- 0 327 458
- EP-A- 0 478 725
- FR-A- 2 704 504

## Beschreibung

Die Erfindung bezieht sich auf eine Feststellbremse für Kraftfahrzeuge, Fahrzeuganhänger oder dergleichen mit einer Anordnung zur Übertragung der Verstellkraft des Handbremshebels auf mindestens einen zur Radbremse führenden Seilzug entsprechend den im Oberbegriff des Anspruches 1 aufgeführten Merkmalen.

Bei vorbekannten Feststellbremsen ist der Handbremshebel im Prinzip an einem ortsfesten Gestell drehbar gelagert und mit einer Sperrklinke zum Eingreifen in ein Zahnsegment bei angezogener Bremshebelstellung versehen. An einem Ausleger des Handbremshebels ist ein Seilzug angelenkt, dessen Ummantelung sich in Distanz davon am Gestell abstützt.

Durch die EP-A 0 040 574 ist eine Feststellbremse der eingangs erwähnten Art bekannt geworden, bei der vom Handbremshebel ein längs einer Zugstange geführter tellerartiger Schieber verstellt wird, der auf eine Gesperrhülse einwirkt. Diese umgreift die Zugstange, wobei die Außenfläche der Zugstange und die Bohrungswandung der Gesperrhülse mit einer nur einseitig wirkenden, widerhakenförmigen Verzahnung versehen sind. Am freien Ende der Zugstange sitzt ortsfest eine Scheibe, die eine gegen einen Bund der Gesperrhülse wirkende Druckfeder abstützt.

Diese Druckfeder soll ein sich im Laufe der Zeit im Gesperre einstellendes Spiel ausgleichen.

Wenn aber die Rückstellkraft der Feder in der Radbremse aufgrund äußerer Einflüsse, wie z.B. Vereisung oder Verschmutzung, nicht ausreicht, den Bowdenzug und damit die Zugstange beim Lösen der Handbremse in die Ausgangslage zurückzubewegen, dann verstellt sich die Gesperrhülse aufgrund der Kraft der Druckfeder längs der Zugstange in eine für den späteren Bremsvorgang unbrauchbare Lage.

Der Erfindung liegt die Aufgabe zugrunde, eine Feststellbremse der eingangs erwähnten Art zu entwickeln, bei der mit wenigen Einzelteilen eine leichtere und billigere Bauweise sowie eine automatische Nachstell- und Ausgleichsmechanik erreicht werden kann, ohne daß die beim erwähnten Stand der Technik vorhandenen Nachteile in Kauf genommen werden müssen.

Die erfindungsgemäße Lösung dieser Aufgabe ergibt sich aus den kennzeichnenden Merkmalen des Anspruches 1. Danach wird zum Verstellen des Seilzuges anstelle des vorbekannten Rastgesperres ein Klemmgesperre verwendet. Bevorzugt besteht das Klemmgesperre aus zwei Klemmstücken, die an gegenüberliegende Seitenflächen der Zugstange angreifen und ihre Anpreßkraft vom Schieber erhalten.

Dadurch, daß das einzelne, aus einem elastischen Material bestehende Klemmstück und die zugeordnete Seite des Schiebers parallel zueinander sich erstreckende Keilflächen aufweisen, deren Neigung so gewählt ist, daß beim Versetzen des Schiebers in Spannrichtung eine Querkraft auf die Zuggabel entsteht, wird beim Anziehen des Handbremshebels die Wandung des Klemmstückes elastisch gegen die Zugstange gespannt und somit ein fester Klemmschluß erzielt. Beim Lösen des Handbremshebels erfolgt wegen der Elastizität des Klemmstück-Materials eine sichere Lösung der Klemmwirkung, so daß die erfindungsgemäße Feststellvorrichtung unabhängig von äußeren Einflüssen jederzeit betriebsfähig ist.

Eine vorteilhafte Weitergestaltung der Erfindung wird durch die Merkmale der Ansprüche 3 und 4 erreicht. Wenn nämlich die Rückstellung des Schiebers und des Klemmstückes durch Anschläge begrenzt wird, erreicht man eine sichere Lösung des Klemmstückes von der Zugstange, insbesondere dann, wenn das Klemmstück früher gegen den ihm zugeordneten Anschlag als der Schieber trifft. Dann werden die Keilflächen mit Sicherheit voneinander distanziert, was zur Rückstellung der Klemmstückwand in die Ausgangslage führt.

Weitere Einzelheiten der Erfindung ergeben sich aus den Unteransprüchen, wobei es darauf ankommt, daß eine Kraft auf die Klemmstücke, beispielsweise mit Hilfe einer Blattfeder, entgegengesetzt zur Spannbewegung einwirkt. Dadurch soll sichergestellt werden, daß das einzelne Klemmstück sich im entlasteten Zustand nicht vom Schieber entfernen kann.

Ein wesentlicher Gegenstand der Erfindung besteht ferner darin, daß die Zugstange von einer am Gestell verankerten Zugfeder in Spannrichtung beaufschlagt ist. Durch diese Federwirkung wird der einzelne Seilzug vorgespannt, ohne daß es auf die Lage des Klemmgesperres ankommt. Dadurch wird eine Spielfreiheit des Seilzuges unabhängig davon erreicht, in welchem Verschleißzustand die Einzelteile des Seilzuges und der Bremsmechanik sind.

Die Erfindung bietet außerdem die Möglichkeit, am Gestell zwei parallel zueinander angeordnete Seilzüge zu führen und die Seilzüge in ein waagebalkenartiges Ausgleichselement einzuhängen, an dem die Zugstange zwischen den Anlenkstellen der Nippel gelenkig angreift. Die Feststellkraft des Handbremshebels kann somit auf zwei Seilzüge übertragen werden, die zur Folge der erfindungsgemäßen Anordnung gleichmäßig auf Zug belastet und spielfreier angeordnet sind.

Diese und weitere Merkmale ergeben sich aus der Zeichnung. In ihr ist die Erfindung schematisch und beispielsweise dargestellt. Es zeigen:
- Figur 1:: eine Teilseitenansicht der erfindungsgemäßen Feststellbremse,
- Figur 2:: einen Vertikalschnitt längs der Linie II-II durch die Feststellbremse gemäß Figur 1,
- Figur 3:: einen Horizontalschnitt längs der Linie III-III durch das Klemmgesperre gemäß Figur 1 und
- Figuren 4 bis 6:: Horizontalschnitte gemäß Figur 3 in verkleinerter Darstellung und mit unterschiedlichen Stellungen des Klemmgesperres.

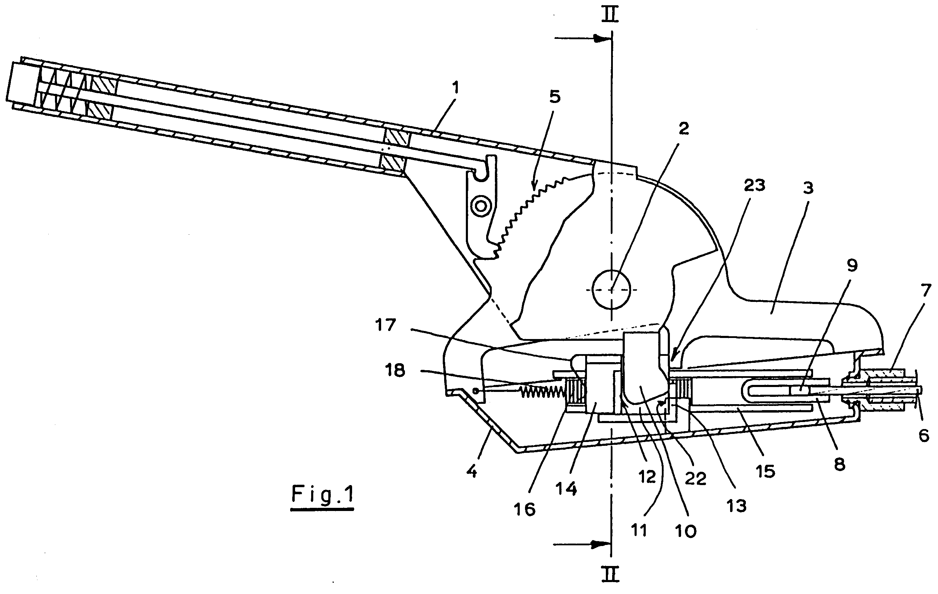

Die in Figur 1 dargestellte Feststellbremse weist den üblichen Handbremshebel (1) auf, der um die Drehachse (2) an einem ortsfesten Gestell (4) bzw. an einem mit diesem Gestell (4) verbundenen Brückenträger (3) drehbar gelagert ist. Der Brückenträger (3) weist ein Zahnsegment (5) auf, in welches eine nicht dargestellte Sperrklinke in der angezogenen Stellung des Handbremshebels (1) in üblicher Weise einrasten kann.

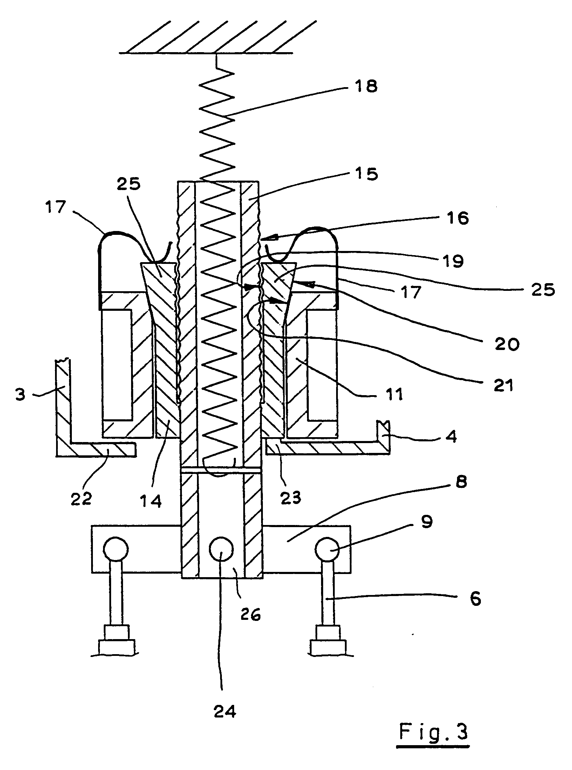

Am Gestell (4) ist ein Seilzug (6) mit seiner Anschlußkappe (7) geführt und abgestützt. Wie Figur 3 zeigt, können auch zwei Seilzüge (6) nebeneinander angeordnet werden. In diesem Fall werden die Nippel (9) des einzelnen Seilzuges in ein auswaagebalkenartiges Ausgleichselement (8) eingehängt, das mittels des Gelenkes (24) an einer sogenannten Zugstange (15) gelagert ist.

Die Zugstange (15) ist, wie Figuren 1 und 3 zeigen, durch eine Zugfeder (18) vorgespannt, die sich am Gestell (4) abstützt. Diese Zugfeder (18) sorgt dafür, daß der einzelne Seilzug (6) ohne Rücksicht auf seine Stellung und den Verschleiß der Bowdenzüge und der Bremsmechanik spielfrei bleibt.

Die Zuggabel (15) wird vom Handbremshebel (1) über ein Klemmgesperre (14) verschoben, so daß dadurch der einzelne Seilzug (6) angespannt wird.

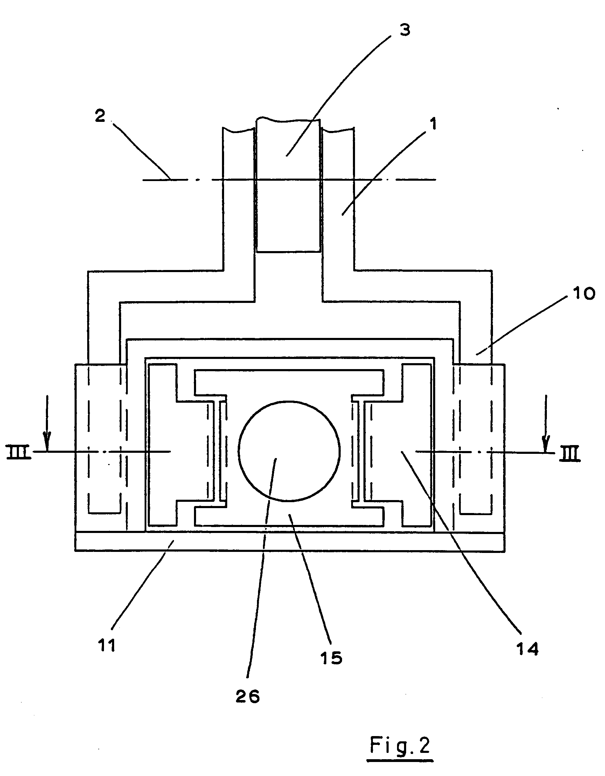

Zu diesem Zweck wird die Zugstange (15), wie dies am besten aus Figur 2 erkennbar ist, von einem Schieber (11) umgriffen. In diesen Schieber (11) ragen beidseitig Hebelarme (10) ein, welche auf jeweils eine vordere Anschlagwand (12) und eine hintere Anschlagwand (13) je nach Drehrichtung des Handbremshebels (1) eingreifen können. Die Hebelarme (10) sind fester Bestandteil des Handbremshebels (1).

Zwischen dem Schieber (11) und der Zugstange (15) befinden sich beidseits Klemmstücke (14), die ein Klemmgesperre bilden.

Beim Ausführungsbeispiel der Figuren 2 und 3 bestehen die Klemmstücke (14) aus Kunststoff, der eine besonders große Zähigkeit und Elastizität aufweisen soll. Wie nämlich Figur 3 im Detail zeigt (ohne daß Maßstäblichkeit vorgesehen ist) weisen die Klemmstücke (14) und die Seitenwände des Schiebers (11) parallel zueinander liegende Keilflächen (20,21) auf, die so geneigt sind, daß beim Anziehen des Handbremshebels (1) in die Bremsstellung die Keilfläche (21) des Schiebers (11) das zugeordnete Klemmstück (14) gegen die Seitenfläche der Zugstange (15) drückt.

Um die Klemmwirkung zu erhöhen, sind in den Seitenflächen der Zugstange (15) Verzahnungen (16) sowie in den Innenflächen der Klemmstücke (14) Verzahnungen (19) vorgesehen, die beim Betätigen des Schiebers (11) durch Verformung der federnden Wände (25) der Klemmstücke (14) ineinander greifen und einen Formschluß bilden. Die Verstellbewegung des Schiebers (11) hat dann eine gleich gerichtete Verstellbewegung der Zugstange (15) und damit ein Anspannen der Seilzüge (6) zur Folge.

Während der Verstellung der Zugstange (15) und der Seilzüge (6) in Spannrichtung wird die Zugfeder (18) geringfügig entlastet. Sobald aber die Feststellbremse wieder gelöst wird und die Zugstange (15) in ihre Ausgangsstellung zurückkehrt, übernimmt die Zugfeder (18) wieder den Spielausgleich in den Seilzügen (6).

Damit die Klemmstücke (14) sich nicht unabhängig vom Schieber (12) in der Ruhestellung lösen können, sind Blattfedern (17) vorgesehen, die am Schieber (11) befestigt sind und gegen die Stirnfläche der Klemmstücke (14) einwirken. Damit werden die Klemmstücke (14) gegen den Schieber (11) verspannt, ohne daß die Federkraft der Blattfeder (17) den Spannvorgang der Feststellbremse beeinträchtigt. Beim Anziehen der Handbremse drückt die Blattfeder (17) die Klemmstücke (14) mit ihren Keilflächen (20) gegen die Keilflächen (21) des Schiebers (11) und stellt eine Sperrhilfe für das Klemmgesperre dar.

Am Gestell (4) ist ein Anschlag (22) vorgesehen, gegen welchen der Schieber (11) auftrifft, wenn der Handbremshebel (1) in die Lösestellung zurückbewegt wird. Andererseits ist am Brückenträger (3) ein weiterer Anschlag (23) vorgesehen, gegen welchen das einzelne Klemmstück (14) auftrifft, insbesondere unter der Wirkung der Blattfeder (17). Hierbei ist vorgesehen, daß das Klemmstück (14) früher gegen seinen Anschlag (23) trifft als der Schieber (21) gegen seinen Anschlag (22). Damit wird erreicht, daß beim Lösen des Handbremshebels eine vollkommene Distanzierung des Schiebers (11) von den Klemmstücken (14) eintritt.

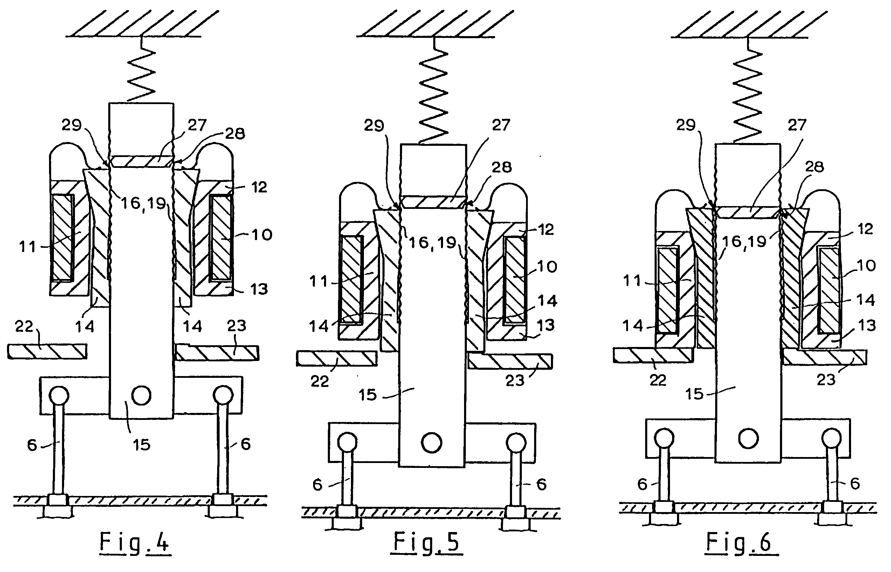

In den Figuren 4 bis 6 ist das Klemmgesperre gemäß Figur 3 in den verschiedenen Stellungen gezeigt, wobei zusätzlich ein Spreizelement (27) dargestellt ist, das Bestandteil des Schiebers (11) ist. Dieses Spreizelement (27) weist keilförmig sich verjüngende Ränder (28) auf, welche gegen die innenseitig befindlichen Stirnkanten (29) der Klemmstücke (14) wirken und beim Auftreffen die Klemmstücke (14) auseinanderspreizen, so daß diese sich aus der Verzahnung (16, 19) lösen können.

Das Beispiel der Figur 4 zeigt das Klemmgesperre in der Spannstellung der Bremse. Die Hebelarme (10) des Handbremshebels (1) haben den Schieber (11) über die vordere Anschlagwand (12) nach oben (in der Zeichnung) versetzt, wodurch über die Wirkung der Keilflächen (20, 21) die Verzahnung (16, 19) in Eingriff gekommen ist. Die Seilzüge (6) sind angespannt. Man erkennt auch, daß zwischen dem unteren Rand der Klemmstücke (14) und den Anschlägen (22, 23) ein größerer Abstand sich befindet.

Figur 5 zeigt die Lösestellung der Bremse, wenn der Klemmechanismus noch geschlossen ist. Der Schieber (11) ist nach unten bewegt worden, wobei die an der Radbremse befindliche Rückstellfeder die Seilzüge (6) zurückgeholt hat. Deshalb liegen die Hebelarme (10) des Handbremshebels (1) noch an der vorderen Anschlagwand (12) an. Das Klemmstück (14) ist gegen den ortsfesten Anschlag (23) angestoßen und kann nun an der Rückwärtsbewegung nicht mehr teilnehmen, wohingegen der Handbremshebel (1) mit den Hebelarmen (10) den Schieber (11) noch weiter zurückstellen kann. Somit können sich die Keilflächen (20, 21) voneinander lösen, was zur Folge haben müßte, daß die elastische Verformung der federnden Wand (25) der Klemmstücke (14) aufgehoben wird, so daß die Verzahnungen (16, 19) voneinander freikommen.

Wenn aber Adhäsionskräfte, Vereisungen oder Verschmutzungen und dergleichen das Rückstellen der federnden Wände (25) in ihre Ausgangslage erschweren oder verhindern sollten, dann wird durch das Spreizelement (27) eine zwangsweise Rückstellung der federnden Elemente herbeigeführt.

Auf dem Weg von der Stellung gemäß Figur 5 zur Stellung gemäß Figur 6 taucht das mit dem Schieber (11) fest verbundene Spreizelement (27) mit seinen schrägen Rändern (28) in den Raum zwischen den Klemmstücken (14) ein. Die schrägen Ränder (28) wirken auf die innenliegenden Stirnkanten (29) der Klemmstücke (14) ein und zwingen diese bzw. die federnden Wände (25) nach außen, was zur vollkommenen Distanzierung der Verzahnungen (16, 19) führt.

Aus Figur 6 erkennt man weiterhin, daß beim Rückhub des Schiebers (11) die Hebelarme (10) des Handbremshebels (1) gegen die hintere Anschlagwand (13) des Schiebers (11) wirken.

Die Figuren 4 bis 6 zeigen somit, daß der Schieber (11) und die Klemmstücke (14) exakte Positionen beim Lösen der Bremse einnehmen und daß die Zugstange (15) in der Lösestellung der Handbremse völlig freigegeben ist und in ihre Ausgangslage zurückkehren kann, ohne daß äußere Einwirkungen die erfindungsgemäße Funktion beeinflussen können.

Wie die Figur 2 zeigt, ist in der Zugstange (15) eine Bohrung (26) vorgesehen, welche im wesentlichen dazu bestimmt ist, die Zugfeder (18) aufzunehmen, die infolge dessen eine größere Länge zur Erfüllung ihrer Aufgabe erhalten kann.

Das Funktionsprinzip der Erfindung ist folgendes:

Der Handbremshebel (1) wird aus der in Figur (1) gezeigten Ruhestellung in Uhrzeigerrichtung um die Achse (2) verdreht. Die am Handbremshebel (1) beidseitig angeordneten Hebelarme (10) greifen in passende Führungen des Schiebers (11) ein und Verstellen den Schieber in Spannrichtung. Durch diese Schieberbewegung und die Keilflächen (20, 21) werden die Klemmstücke (14) im Bereich ihrer federnden Wände (25) gegen die Zugstange (15) gedrückt, wobei die Verzahnungen (16, 19) in Eingriff gelangen. Während dieser anfänglichen Schieberbewegung verhindern die Blattfedern (17) eine Mitnahme der Klemmstücke (14). Sobald der Formschluß der Verzahnungen (16,19) herbeigeführt ist, entsteht ein schlupffreies Klemmgesperre mit der Folge, daß die Bewegung des Schiebers (11) zu einer entsprechenden Bewegung der Zugstange (15) führt, wodurch der einzelne oder die beiden Seilzüge (6) angezogen werden.

Bei der Entlastung der Feststellbremse erfolgt über die Anschläge (22, 23) eine gesicherte Freigabe der Zugstange (15) mit der Folge, daß diese durch die Wirkung der Zugfeder (18) eine spielfreie Einstellung der Seilzüge (6) und der Bremsmechanik herbeiführen.

Die spielfreie Einstellung der Seilzüge (6) und der Bremsmechanik durch die Zugfeder (18) hat zur Folge, daß bei jeder Handbremsbetätigung das Klemmgesperre an der momentan passenden Stelle der Zugstange (15) eingreift und dadurch die notwendige Drehbewegung des Handbremshebels, um die Bremse zu betätigen, immer konstant bleibt.

### STÜCKLISTE

- 1: Handbremshebel
- 2: Drehachse
- 3: Brückenträger
- 4: Gestell
- 5: Zahnsegment
- 6: Seilzug
- 7: Anschlußkappe
- 8: Ausgleichselement
- 9: Nippel
- 10: Hebelarm
- 11: Schieber
- 12: Anschlagwand vorne
- 13: Anschlagwand hinten
- 14: Klemmstück (Klemmgesperre)
- 15: Zugstange
- 16: Verzahnung
- 17: Blattfeder
- 18: Zugfeder
- 19: Verzahnung
- 20: Keilfläche
- 21: Keilfläche
- 22: Anschlag
- 23: Anschlag
- 24: Gelenk
- 25: federnde Wand
- 26: Bohrung
- 27: Spreizelement
- 28: Rand
- 29: Stirnkante

## Patentansprüche

1. Feststellbremse für Kraftfahrzeuge, Fahrzeuganhänger oder dergleichen mit einer Anordnung zur Übertragung der Verstellkraft des Handbremshebels (1) auf mindestens einen zur Radbremse führenden Seilzug (6), bei der ein vom Handbremshebel (1) betätigbarer Schieber (11) über ein lösbares Gesperre auf eine mit dem Seilzug (6) verbundene Zugstange (15) einwirkt und die gegeneinander greifenden Flächen des Gesperres mit einer Verzahnung (16) versehen sind, dadurch **gekennzeichnet**, daß das Gesperre als Klemmgesperre ausgebildet ist, bei dem mindestens ein vom Schieber (11) längs der Zugstange (15) verstellbares Klemmstück (14) aus einem elastischen Material vorgesehen ist, dessen federnde Wandung durch Einwirkung von am Schieber (11) und am Klemmstück (14) befindliche Keilflächen (20, 21) elastisch gegen die Zugstange (15) spannbar ist.

2. Feststellbremse nach Anspruch 1, dadurch **gekennzeichnet**, daß das Klemmgesperre aus zwei Klemmstücken (14) besteht, die an gegenüberliegenden Seitenflächen der Zugstange (15) angreifen.

3. Feststellbremse nach Anspruch 1 oder 2, dadurch **gekennzeichnet**, daß am Gestell (4) der Feststellbremse oder/und an einem zur Lagerung (2) des Handbremshebels (1) dienenden gestellfesten Brückenträger (3) ein Anschlag (22, 23) zur Begrenzung des Rückstellweges des Schiebers (11) bzw. des Klemmstücks (14) vorgesehen sind.

4. Feststellbremse nach Anspruch 3, dadurch **gekennzeichnet**, daß das Klemmstück (14) früher gegen seinen Anschlag (23) auftrifft als der Schieber (11) gegen seinen Anschlang (22).

5. Feststellbremse nach einem der Ansprüche 1 bis 4, dadurch **gekennzeichnet**, daß das einzelne Klemmstück (14) von einer Blattfeder (17) gegen den Schieber (11) entgegengesetzt zur Spannrichtung gespannt ist.

6. Feststellbremse nach einem der Ansprüche 1 bis 5, dadurch **gekennzeichnet**, daß die Zugstange (15) von einer am Gestell (4) verankerten Zugfeder (18) in Spannrichtung beaufschlagt ist.

7. Feststellbremse nach einem der Ansprüche 1 bis 6, dadurch **gekennzeichnet**, daß am Gestell (4) zwei parallel zueinander angeordnete Seilzüge (6) geführt und die Seilzüge (6) in ein waagebalkenartiges Ausgleichselement (8) eingehängt sind, an dem die Zugstange (15) zwischen den Anlenkstellen der Nippel (9) gelenkig (24) angreift.

8. Feststellbremse nach einem der Ansprüche 1 bis 7, dadurch **gekennzeichnet**, daß am Schieber (11) ein Spreizelement (27) angeordnet ist, das beim Rückstellen des Schiebers (11) gegen Stirnkanten (29) der Klemmstücke (14) trifft und die Klemmstücke (14) aus der Verzahnung (16, 19) löst.

9. Feststellbremse nach Anspruch 8, dadurch **gekennzeichnet**, daß das Spreizelement (27) abgeschrägte Ränder (28) aufweist.

## Claims

1. Parking brake for motor vehicles, vehicle trailers or the like, having an arrangement for transmitting the displacing force of the hand brake lever (1) to at least one Bowden cable (6) leading to the wheel brake, in which a slide (11) capable of being actuated by the hand brake lever (1) acts, via a releasable locking mechanism, on a drawbar (15) connected to the Bowden cable (6) and the mutually gripping surfaces of the locking mechanism are provided with toothing (16), characterised in that the locking mechanism is designed as a clamping locking mechanism, in which at least one clamping part (14), displaceable along the drawbar (15) by the slide (11) and made of an elastic material, is provided, the resilient wall of which can be elastically clamped against the drawbar (15) by the action of wedge surfaces (20, 21) situated on the slide (11) and on the clamping part (14).

2. Parking brake according to Claim 1, characterised in that the clamping locking mechanism comprises two clamping parts (14) which engage on opposite side faces of the drawbar (15).

3. Parking brake according to Claim 1 or 2, characterised in that a stop (22, 23) for limiting the return travel of the slide (11) and of the clamping part (14), respectively, is provided on the frame (4) of the parking brake or/and on a bridge support (3) which is fixed to the frame and serves for the mounting (2) of the hand brake lever (1).

4. Parking brake according to Claim 3, characterised in that the clamping part (14) strikes its stop (23) earlier than the slide (11) strikes its stop (22).

5. Parking brake according to one of Claims 1 to 4, characterised in that the individual clamping part (14) is clamped against the slide (11), counter to the tensioning direction, by a leaf spring (17).

6. Parking brake according to one of Claims 1 to 5, characterised in that the drawbar (15) is loaded in the tensioning direction by a tension spring (18) anchored on the frame (4).

7. Parking brake according to one of Claims 1 to 6, characterised in that two Bowden cables (6) arranged mutually parallel are guided on the frame (4) and the Bowden cables (6) are attached to a balance beam-like compensating element (8), on which the drawbar (15) engages in articulated fashion (24) between the coupling points of the nipples (9).

8. Parking brake according to one of Claims 1 to 7, characterised in that a spreading element (27) is arranged on the slide (11), which spreading element (27) during the return of the slide (11) strikes front edges (29) of the clamping parts (14) and releases the clamping parts (14) from the toothing (16, 19).

9. Parking brake according to Claim 8, characterised in that the spreading element (27) has bevelled edges (28).

## Revendications

1. Frein de stationnement pour véhicules automobiles, remorques ou analogues, comportant un dispositif pour transmettre la force de manoeuvre du levier de frein à main (1) à au moins un câble de traction (6) menant au frein de roue, dans lequel un organe coulissant (11) actionnable par le levier de frein à main (1) agit, par l'intermédiaire d'un système d'arrêt libérable, sur une tige de traction (15) reliée au câble de traction (6), et les surfaces du système d'arrêt, mutuellement en prise, sont pourvues d'une denture (16), caractérisé par le fait que le système d'arrêt est réalisé sous la forme d'un système d'arrêt par coincement dans lequel est prévue au moins une pièce de coincement (14) en un matériau élastique pouvant être déplacée, par l'organe coulissant (11), le long de la tige de traction (15), et dont la paroi élastique peut être bloquée élastiquement contre la tige de traction (15) sous l'action de surfaces cunéiformes (20, 21) situées sur l'organe coulissant (11) et sur la pièce de coincement (14).

2. Frein de stationnement selon la revendication 1, caractérisé par le fait que le système d'arrêt par coincement se compose de deux pièces de coincement (14) venant en prise avec des surfaces latérales opposées de la tige de traction (15).

3. Frein de stationnement selon la revendication 1 ou 2, caractérisé par le fait qu'une butée (22, 23) est prévue, sur l'embase (4) du frein de stationnement et/ou sur un support (3) en étrier assujetti à l'embase et servant au montage (2) du levier de frein à main (1), afin de limiter le trajet respectif de rappel de l'organe coulissant (11) ou de la pièce de coincement (14).

4. Frein de stationnement selon la revendication 3, caractérisé par le fait que la pièce de coincement (14) vient rencontrer sa butée (23) avant que l'organe coulissant (11) vienne rencontrer sa butée (22).

5. Frein de stationnement selon l'une des revendications 1 à 4, caractérisé par le fait que la pièce individuelle de coincement (14) est bloquée contre l'organe coulissant (11), par une lame de ressort (17), en sens inverse de la direction de serrage.

6. Frein de stationnement selon l'une des revendications 1 à 5, caractérisé par le fait que la tige de traction (15) est sollicitée, dans la direction de serrage, par un ressort de traction (18) ancré sur l'embase (4).

7. Frein de stationnement selon l'une des revendications 1 à 6, caractérisé par le fait que deux câbles de traction (6) disposés parallèlement l'un à l'autre sont guidés sur l'embase (4), et les câbles de traction (6) sont accrochés dans un élément de compensation (8) du type fléau de balance, avec lequel la tige de traction (15) est en prise articulée (24) entre les zones d'articulation des pièces de rattachement (9).

8. Frein de stationnement selon l'une des revendications 1 à 7, caractérisé par le fait qu'un élément d'écartement (27), disposé sur l'organe coulissant (11), vient buter contre des bords extrêmes (29) des pièces de coincement (14) lors du rappel de l'organe coulissant (11), et fait sortir les pièces de coincement (14) de la denture (16, 19).

9. Frein de stationnement selon la revendication 8, caractérisé par le fait que l'élément d'écartement (27) présente des bords biseautés (28).
